# EUROPÄISCHE PATENTANMELDUNG

(11) **EP 2 759 431 A2**
(43) Veröffentlichungstag der Anmeldung: **30.07.2014**
(21) Anmeldenummer: 13198305.8
(22) Anmeldetag: 19.12.2013
(51) Int. Cl.: B60J 7/06

(54) **Faltplatte und Spriegel für eine Schiebeverdeckstruktur eines Lastwagens**

(30) Priorität: 23.01.2013 DE 102013201000
(71) Anmelder: ZF Friedrichshafen AG, 88038 Friedrichshafen (DE)
(72) Erfinder: Tiemann, Burkhard, 49152 Bad Essen (DE); Lagemann, Bernard, 49434 Neuenkirchen (DE)

(57) **Zusammenfassung**

Die Erfindung betrifft eine Faltplatte (9) für eine Schiebeverdeckstruktur (1) eines Lastwagens, welche ein erstes Faltplattenelement (14) und ein zweites Faltplattenelement (14') aufweist, welche jeweilig mit einem mittig zwischen dem ersten Faltplattenelement (14) und dem zweiten Faltplattenelement (14') angeordneten Gelenkachsenelement (16) verbunden sind, wobei das Gelenkachsenelement (16) eine Spriegelanbindungseinrichtung (10) aufweist. Die Erfindung betrifft weiterhin einen Spriegel (2) für eine Schiebeverdeckstruktur (1) eines Lastwagens, welcher aus Kunststoff hergestellt ist.

## Beschreibung

Die Erfindung betrifft eine Faltplatte für eine Schiebeverdeckstruktur gemäß dem Oberbegriff des Anspruchs 1 und einen Spriegel für eine Schiebeverdeckstruktur gemäß dem Oberbegriff des Anspruchs 12.

Lastwagen, das heißt Lastkraftwagen und Anhänger (Trailer) sowie Auflieger der Lastkraftwagen, sind im Stand der Technik in verschiedenen Ausgestaltungen bekannt. So sind beispielsweise die sogenannten Pritschenwagen bekannt, die eine ebene offene Ladefläche hinter der Fahrerkabine aufweisen. Um dennoch einen sicheren und trockenen Transport von Ladung zu gewährleisten, ist die Ladefläche derartiger Pritschenwagen üblicherweise mit einem Verdeck versehen. Im Stand der Technik sind hierzu feste Verdecke und Schiebeverdecke bekannt. Schiebeverdecke können geöffnet werden, weisen gegenüber festen Verdecken daher den Vorteil auf, dass der Ladevorgang des Lastwagens, beispielsweise bei Kranbeladung, durch den Schiebemechanismus erheblich erleichtert wird, da der Laderaum von oben oder seitlich zugänglich gemacht werden kann.

Um ein leichtes Öffnen und Schließen des Schiebeverdecks zu ermöglichen, ist es erforderlich, dass eine auf der Verdeckstruktur aufliegende Plane beim Öffnen gleichmäßig gefaltet wird. Hierzu ist eine Schiebeverdeckstruktur mit einer Vielzahl von Spriegeln versehen, welche quer zu zwei parallelen Längsgurten verlaufen, und welche entlang der jeweiligen Längsgurte zur Zwangsfaltung der auf den Spriegeln der Schiebeverdeckstruktur aufliegenden Plane über sogenannte Faltplatten miteinander verbunden sind.

Aus DE 10 2005 016 158 B3 ist ein Verdeckgestell zum Falten einer Dachplane bekannt, welches eine Vielzahl von Spriegeln aufweist, die an ihren beidseitigen Enden jeweils mit einem entlang seitlicher Längsschienen verfahrbaren Schlitten verbunden sind. Im Bereich der Schlitten sind Faltmittel für die Zwangsfaltung einer auf den Spriegeln aufliegenden Plane vorgesehen. Die Faltmittel sind endseitig in einer gekrümmten Führung des Schlittens eingesetzt und führen zum Aufrichten eine Schwenkbewegung innerhalb der gekrümmten Führung aus.

Die üblicherweise aus Stahl hergestellten Spriegel, die Schlitten bzw. Rollenwagen, mit denen die Spriegel verbunden sind und die Plane selbst weisen jedoch ein hohes Gewicht auf, welches auf die Faltplatten wirkt. Zudem kann sich bei den herkömmlichen Schiebeverdeckkonstruktionen, bei welchen die Spriegel an den Enden der Faltplatten angeordnet sind und somit beim Auffalten der Plane in der Ebene der Längsgurte verbleiben, Regenwasser beim Auffalten der Plane in sogenannten Wassersäcken ansammeln, was das auf die Faltplatten wirkende Gewicht noch weiter erhöht. Dies kann ein sicheres Auffalten der Plane beeinträchtigen.

Daher ist es eine Aufgabe der vorliegenden Erfindung, eine Faltplatte und einen Spriegel für eine Schiebeverdeckstruktur zu schaffen, welche ein sicheres und einfaches Auffalten einer Plane ermöglichen.

Diese Aufgabe wird durch eine Faltplatte für eine Schiebeverdeckstruktur mit den Merkmalen gemäß Anspruch 1 und einen Spriegel für eine Schiebeverdeckstruktur mit den Merkmalen gemäß Anspruch 12 gelöst. Bevorzugte Ausführungsformen der Erfindung sind in den abhängigen Ansprüchen definiert.

Es wird eine Faltplatte für eine Schiebeverdeckstruktur eines Lastwagens bereitgestellt, welche ein erstes Faltplattenelement und ein zweites Faltplattenelement aufweist, welche jeweilig mit einem mittig zwischen dem ersten Faltplattenelement und dem zweiten Faltplattenelement angeordneten Gelenkachsenelement verbunden sind, wobei das Gelenkachsenelement eine Spriegelanbindungseinrichtung aufweist. Durch die mittige Anordnung der Spriegelanbindungseinrichtung und somit des darin aufgenommenen Spriegels wird dieser beim Auffalten der Schiebeverdeckstruktur angehoben und bildet dadurch einen Scheitelpunkt, so dass ein sicheres Ablaufen von Regenwasser gewährleistet wird. Auch können sich bei aufgefaltetem Verdeck mittels dieser Konfiguration keine Wassersäcke bilden. Hierdurch kann ein sicheres und einfaches Auffalten der Schiebeverdeckstruktur gewährleistet werden. Die zuvor beschriebene Anwendung der Faltplatte für eine Schiebeverdeckstruktur eines Lastwagens umfasst sowohl die Anwendung für eine angetriebene Zugmaschine als auch für einen gezogenen Anhänger oder Auflieger. Die Faltplatte kann darüber hinaus auch für andere Anwendungen eingesetzt werden, beispielsweise für eine Schiebeverdeckstruktur eines Sightseeing-Busses oder eines anderen Sonderfahrzeugs. Die Schiebeverdeckstruktur kann allgemein Straßenfahrzeugen oder schienengebundenen Fahrzeugen zugeordnet sein, wobei ein Öffnen bzw. Schließen der Schiebeverdeckstruktur je nach Anordnung derselben in Fahrzeuglängs- oder in Fahrzeugquerrichtung erfolgen kann. Weiterhin kann die zuvor beschriebene Schiebeverdeckstruktur auch einer stationären Einrichtung wie beispielsweise einem Container zugeordnet sein.

Gemäß einer bevorzugten Ausführungsform sind an dem Gelenkachsenelement Filmscharniere vorgesehen, insbesondere zumindest ein erstes Filmscharnier, welches das erste Faltplattenelement gelenkig mit dem Gelenkachsenelement verbindet, und zumindest ein zweites Filmscharnier, welches das zweite Faltplattenelement gelenkig mit dem Gelenkachsenelement verbindet. Das Vorsehen der Filmscharniere führt zu einer weiteren Gewichtsreduzierung, da diese aus Kunststoff hergestellt sind.

Gemäß noch einer bevorzugten Ausführungsform ist an dem ersten Faltplattenelement und an dem zweiten Faltplattenelement jeweils ein erstes Abstützelement angeordnet, welches ausgebildet ist, um sich in aufgeklapptem Zustand der Faltplatte an einem jeweils gegenüberliegend dem ersten Abstützelement an dem Gelenkachsenelement angeordneten zweiten Abstützelement abzustützen. Dies ist vorteilhaft, da im aufgestellten Zustand der Faltplatte aufgrund des Gewichts, welches über die Plane auf die Spriegel übertragen wird, die Filmscharniere nach unten gezogen werden könnten, so dass die Funktionsweise beeinträchtigt oder die Filmscharniere beschädigt werden könnten. Durch die bei aufgefaltetem Schiebeverdeck ineinandergreifenden Abstützelemente wird jedoch eine von dem Spriegel ausgehende und nach unten wirkende Kraft somit über die Spriegelanbindungseinrichtung und die ersten und zweiten Abstützelemente direkt auf die starren seitlichen ersten und zweiten Faltplattenelemente übertragen, so dass keine Kraft auf die Filmscharniere wirkt. Gemäß noch einer weiteren bevorzugten Ausführungsform ist das erste Abstützelement als Vorsprung ausgebildet und das zweite Abstützelement als Ausnehmung zum in Eingriff nehmen des Vorsprungs.

Vorzugsweise weist das zweite Abstützelement gegenüber dem ersten Abstützelement in aufgefaltetem Zustand einen Überstand auf. Hierdurch wird gewährleistet, dass beim Auffalten der Faltplatte sichergestellt ist, dass das erste und das zweite Abstützelement miteinander in Eingriff gelangen. Vorzugsweise weist der Überstand eine Überstandslänge in einem Bereich von zirka 20 Millimeter auf.

Darüber hinaus ist es vorteilhaft, wenn die Faltplatte aus Kunststoff, insbesondere einstückig, hergestellt ist. Dies vereinfacht die Herstellungs- und Materialkosten und reduziert darüber hinaus das Gewicht der Schiebeverdeckstruktur. Ein bevorzugter Kunststoff zur Herstellung der Faltplatte ist beispielsweise Polyprophylen (PP).

Vorzugsweise weisen das zumindest eine erste Filmscharnier und das zumindest eine zweite Filmscharnier jeweils eine Wölbung auf. Durch jeweiliges Aufweisen einer Wölbung bilden das erste und das zweite Filmscharnier gemeinsam ein gerundetes M-Profil aus. Hierdurch kann auf vorteilhafte Weise ein Längenausgleich gewährleistet werden. Bei Zug in Längsrichtung der Faltplatte kann sich die Gesamtlänge der Faltplatte vergrößern, in dem sich die Wölbung der Filmscharniere abflacht. Dies ist ein wesentlicher Aspekt, da sich beispielsweise der gesamte LKW oder LKW-Anhänger, welcher mit einem Schiebeverdeck ausgestattet ist, aufgrund von Temperaturschwankungen ebenfalls in seiner Länge verändert, wobei der als Schiene ausgebildete Längsgurt der Schiebeverdeckstruktur typischerweise aus Metall ausgebildet ist und somit eine andere Ausdehnung aufweist als der Kunststoff, aus welchem die Faltplatten gebildet sind. Aufgrund der Wölbung der an der Faltplatte vorgesehenen Filmscharniere ist jedoch ein Längenausgleich möglich.

Vorzugsweise weisen das erste und das zweite Filmscharnier eine Materialstärke in einem Bereich von zirka 2 Millimeter auf.

Darüber hinaus ist es vorteilhaft, wenn die Spriegelanbindungseinrichtung eine Aufnahme für einen Spriegel aufweist, welche mit einem Element ausgebildet ist, in welches der Spriegel einführbar ist. Dies ermöglicht eine einfache Montage der Spriegel an der Faltplatte.

Gemäß einer weiteren bevorzugten Ausführungsform ist die Aufnahme mit einem Element ausgebildet, welches in den Spriegel einführbar ist. Auch diese Konfiguration bietet eine einfache, schnelle und sichere Montage der Spriegel an die Faltplatten.

Gemäß noch einer weiteren bevorzugten Ausführungsform ist die Aufnahme mit einer Rasteinrichtung zum Verrasten mit dem Spriegel ausgebildet. Dies verhindert ein Lösen des Spriegels auf einfache und effektive Art und Weise. Wenn der Spriegel als pultrudiertes Element gebildet ist, ist es jedoch nicht möglich, an dem Spriegel direkt eine Rasteinrichtung zu bilden. In diesem Fall kann gemäß einer bevorzugten Ausführungsform der Spriegel mittels eines separaten als Verriegelungskeil ausgebildeten Rasthakens an der Spriegelanbindungseinrichtung gesichert werden. Der Rasthaken greift dabei vorzugsweise in eine Ausnehmung der Spriegelanbindungseinrichtung ein und verhindert dadurch ein Herausrutschen des Spriegels. Aufgrund der Einlaufschräge des Verriegelungskeils, kann der Spriegel, welcher mit einem derartigen Verriegelungskeil ausgestattet ist, besonders einfach in die Spriegelaufnahmeeinrichtung eingeführt werden. Hierbei verformt sich die Spriegelaufnahmeeinrichtung kurzzeitig, indem die obere Decke nach oben gedrückt wird, bis der Verriegelungskeil einrastet. Ein Lösen ist umgekehrt auf einfache Art und Weise möglich, wenn beispielsweise mittels eines Schraubenziehers oder eines anderen ähnlichen Werkzeugs die obere Decke angehoben wird, so dass der Verriegelungskeil nicht mehr in Eingriff mit der Spriegelanbindungseinrichtung steht und somit herausgezogen werden kann.

Vorzugsweise ist die Rasteinrichtung als Ausnehmung in der Aufnahme zum Einrasten einer an dem Spriegel ausgebildeten Rastnase ausgebildet.

Weiterhin wird ein Spriegel für eine Schiebeverdeckstruktur eines Lastwagens bereitgestellt, wobei der Spriegel aus Kunststoff, vorzugsweise aus einem duroplastischen Kunststoff in einem Pultrusionsprozess, der auch als Strangziehprozess bezeichnet wird, hergestellt ist. Durch Vorsehen eines Spriegels aus Kunststoff anstelle eines Metallspriegels kann das Gesamtgewicht der Schiebeverdeckstruktur deutlich reduziert werden. Auch werden hierdurch geringere Material- und Herstellungskosten erzielt.

Gemäß einer bevorzugten Ausführungsform weist der Spriegel beidseitig Endabschnitte auf, welche jeweils mit einer Rasteinrichtung, insbesondere mit einer Rastnase, zum Einrasten in eine an einer Spriegelanbindung vorgesehenen Ausnehmung versehen ist. Hierdurch wird ein Herausrutschen des Spriegels aus einer entsprechenden Spriegelaufnahmeeinrichtung effektiv verhindert.

Im Nachfolgenden werden Ausführungsformen der Erfindung unter Bezugnahme auf die beigefügte Zeichnung näher beschrieben. Es zeigen:
Fig. 1 eine Schiebeverdeckstruktur gemäß einer Ausführungsform der Erfindung;
Fig. 2 eine perspektivische Ansicht eines vorderen zweiten Endes der in Figur 1 dargestellten Schiebeverdeckstruktur in geöffnetem Zustand;
Fig. 3A, 3B, 3C Ansichten einer Faltplatte gemäß einer Ausführungsform;
Fig. 4 die in Fig. 3A-3C dargestellte Faltplatte mit einem darin aufgenommenen Spriegel;
Fig. 5A, 5B Ansichten eines Details im Spriegelanbindungsbereich der in Fig. 3A-3C dargestellten Faltplatte;
Fig. 6 eine Schnittansicht durch die in Fig. 3A-3C dargestellte Faltplatte;
Fig. 7A, 7B Details des Gelenkbereichs der in Fig. 3A-3C dargestellten Faltplatte;
Fig. 8A, 8B Ansichten der in Fig. 3A-3C dargestellten Faltplatte, montiert auf Rollenwagen;
Fig. 9 eine Vielzahl von Faltplatten, montiert auf Rollenwagen; und
Fig. 10A, 10B jeweilige Ansichten der in Fig. 3A-3C dargestellten Faltplatte, jeweils montiert auf einem Längsgurt.

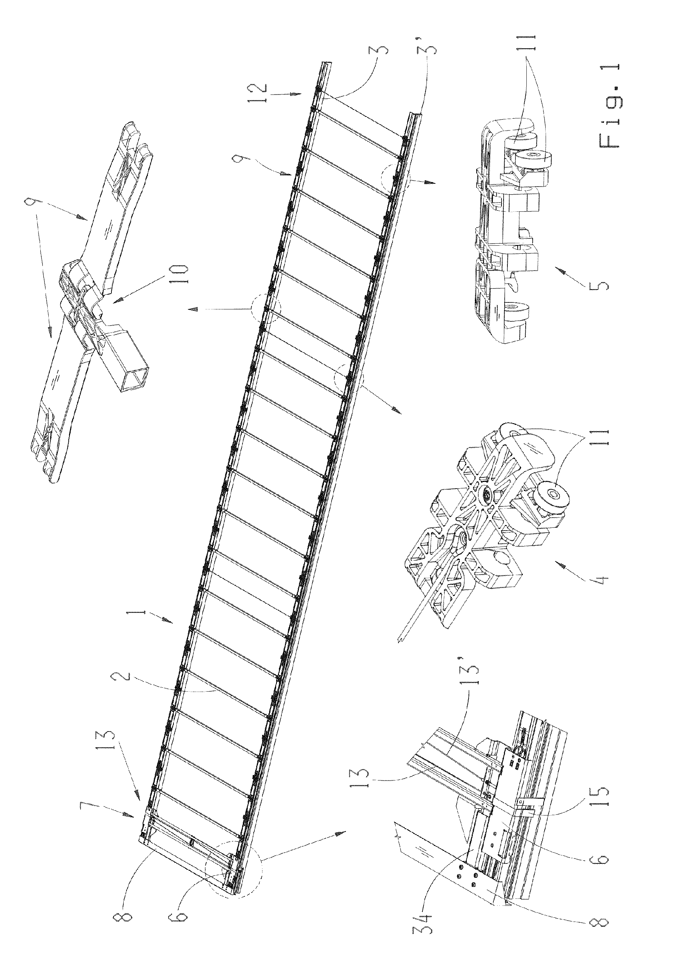

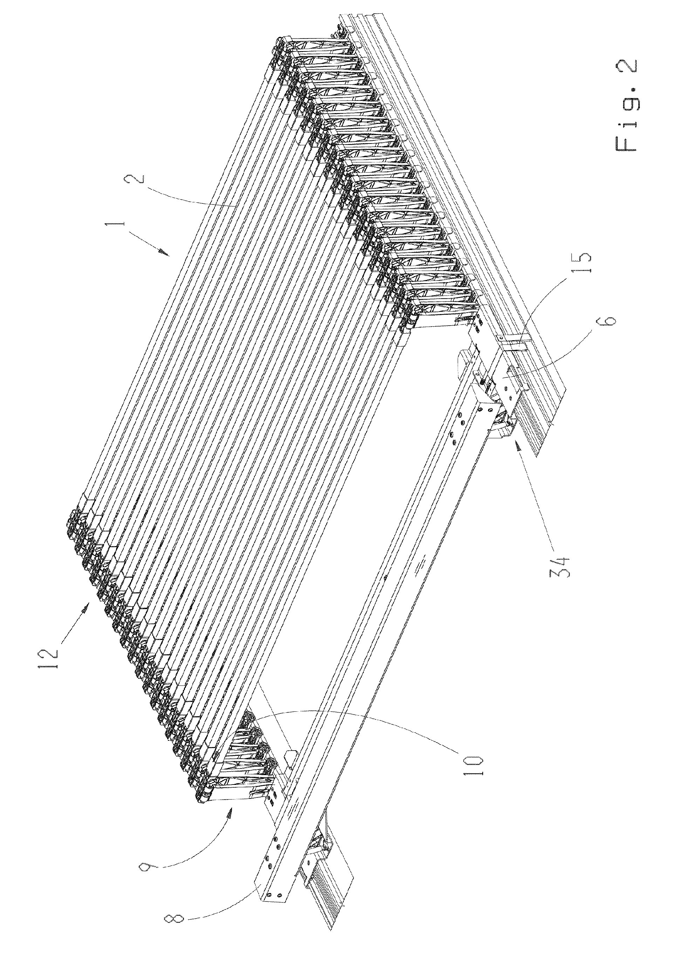

Figur 1 zeigt allgemein eine Schiebeverdeckstruktur 1 für Lastwagen bzw. Trailer, welche hier in ausgefahrenem bzw. geschlossenem Zustand dargestellt ist. Unter Lastwagen werden hier Lastkraftwagen, Lastkraftwagenanhänger und Lastkraftwagenauflieger verstanden. Die Schiebeverdeckstruktur 1 umfasst eine Vielzahl von Spriegeln 2, welche quer zwischen zwei parallel zueinander verlaufenden Längsgurten 3, 3' angeordnet sind. Auf den Spriegeln 2 liegt eine Folie bzw. Plane auf. Die als Schienen ausgebildeten Längsgurte 3, 3' sind einstückig aus Aluminium hergestellt und sind jeweilig mit Laufflächen versehen, an welchen eine Vielzahl von Rollenwagen mit jeweiligen Rollen 11 verschiebbar angeordnet sind, von denen hier lediglich ein mehrteilig ausgebildeter Rollenwagen 4 mit Seilanbindung, ein mehrteilig ausgebildeter Standard-Rollenwagen 5 und ein Endrollenwagen 6 exemplarisch dargestellt sind. Der Endrollenwagen 6 befindet sich an dem ersten Ende 7 der Schiebeverdeckstruktur 1, was dem hinteren Ende eines Lastwagens entspricht, an welchem beispielsweise eine Hebebühne angeordnet ist. An dem gegenüberliegenden vorderen zweiten Ende 12 der Schiebeverdeckstruktur 1 befindet sich das geschlossene Ende, an welchem beispielsweise die Führerkabine des Lastkraftwagens angeordnet ist. Zwischen den jeweils in den Längsgurten 3 und 3' angeordneten Endrollenwagen 6 verläuft quer zu den Längsgurten 3, 3' ein Portalbalken 8, welcher den Abschluss der Schiebeverdeckstruktur 1 bildet. Der Portalbalken 8 dient dazu, einerseits die Plane als in Querrichtung versteifendes Element an dem Trailer zu befestigen. Weiterhin greifen typischerweise die Verschlüsse der Türen in den Portalbalken 8 ein, so dass bei verschlossenen Türen diese über die Türverschlüsse des Portalbalkens 8 ebenfalls befestigt und gesichert sind. Der Portalbalken 8 ist über eine Verbindungsstruktur 34 (siehe Figur 2), welche Hebelarme umfasst, mit den beidseitig angeordneten Endrollenwagen 6 verbunden, so dass durch Verschwenken der Hebelarme der Portalbalken 8 nach oben geklappt werden kann, um die Schiebeverdeckstruktur 1 zurückzuschieben. Weiterhin ist der Portalbalken 8 mit einer Winkelform ausgeführt, so dass er im heruntergeklappten Zustand auch die endseitigen Stirnseiten der Längsgurte 3, 3' zumindest teilweise übergreift. Um ein Verschieben des Endrollenwagens 6 in der Endposition bei geschlossener Plane zu verhindern, ist ein Verriegelungsmechanismus 13, 13' vorgesehen. Durch Zug an einem Entriegelungsseil 14 kann der Verriegelungsmechanismus 13,13' freigegeben werden, so dass dann der Endrollenwagen 6 entlang der Längsgurte 3, 3' verschiebbar ist. Eine Schlaufe 15 ist für die seitliche Betätigung des Verriegelungsmechanismus 13,13' dargestellt. Nach dem Entriegeln der Endrollenwagen 6 wird mit einer hier nicht dargestellten Stange, welche einen endseitigen Haken aufweist, an der Schlaufe 15 in Längsrichtung der Längsgurte 3, 3' gezogen und die Schiebeverdeckstruktur 1 hierdurch geöffnet. Damit bei diesem Öffnungsvorgang, bei welchem lediglich an einer Seite des Trailers an solch einer Schlaufe 15 gezogen wird, keine Verkantung, d. h. kein Verkippen oder Verdrehen in einer waagerecht stehenden Ebene, der Endrollenwagen 6 auftritt, weisen diese mehrere hier nicht sichtbare Rollen auf. Die Endrollenwagen 6 sind mit den Standard-Rollenwagen 5 über zwischen den jeweiligen Rollenwagen angeordnete Faltplatten 9 verbunden. In der hier dargestellten Ausführungsform sind jeweils 18 Faltplatten 9 pro Längsgurt 3 bzw. 3' vorgesehen. Mittig an den Faltplatten 9 ist eine Spriegelanbindungseinrichtung 10 vorgesehen, an denen die Spriegel 2 befestigt sind, so dass die Spriegel 2 beim Öffnen der Schiebeverdeckstruktur 1 nach oben geschoben werden. Zwischen den Standard-Rollenwagen 5 sind jeweils zwei Rollenwagen 4 mit Seilanbindung zum gegenüberliegenden Rollenwagen 4 vorgesehen, was der Stabilisierung dient. Insbesondere wird hierdurch eine zusätzliche Querversteifung erzielt, da durch das Seil, mit welchem die zwei gegenüberliegenden Rollenwagen 4 verbunden sind, Zugkräfte nach außen abgefangen werden. Wie in Figur 1 ersichtlich ist, sind hier zwei solcher quer zu den Längsgurten 3, 3' verlaufenden Seilanbindungen vorgesehen, welche die Längsgurte 3, 3' in Längsrichtung in etwa Dritteln. Die Längsgurte 3, 3' sind aus Metall, wie beispielsweise Aluminium, ausgebildet, wohingegen die Rollenwagen 4, 5, 6 und Faltplatten 9 zumindest überwiegend aus Kunststoff hergestellt sind.

Damit die hier nicht dargestellte Faltplane in geschlossenem Zustand nicht flattert, was zu einem erheblich höheren Kraftstoffverbrauch führen würde, weist sie mehrere hier nicht dargestellte Rungen auf, welche lösbar mit der Ladefläche verbunden werden können, beispielsweise indem sie in entsprechende Ausnehmungen eingesteckt werden. An der Oberseite sind die Rungen mit den Rollenwagen 4, 5 verbunden.

Figur 2 zeigt eine perspektivische Ansicht eines vorderen zweiten Endes 12 der in Figur 1 dargestellten Schiebeverdeckstruktur 1 in geöffnetem Zustand, in welchem der Portalbalken 8 mittels der Verbindungsstruktur 34 nach oben verschwenkt ist und die in diesem Zustand zusammengeklappten Faltplatten 9 jeweils zusammengefaltet sind, so dass sich auch die mittig in den Faltplatten 9 angeordneten Spriegel 2 in einer angehobenen Stellung befinden. Wie hier gut erkennbar ist, ist die Spriegelanbindung 10 mittig in den Faltplatten 9 ausgebildet. Die zusammengeschobenen Spriegel 2 inklusive Portalbalken 8 erstrecken sich in dem hier dargestellten Zustand über eine Länge von 1,90 m.

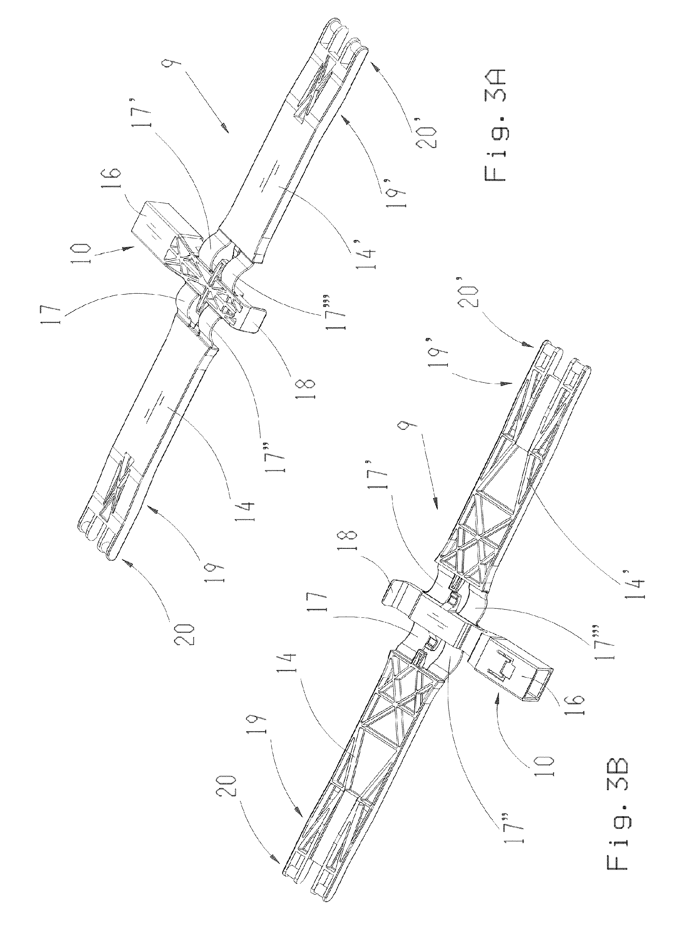

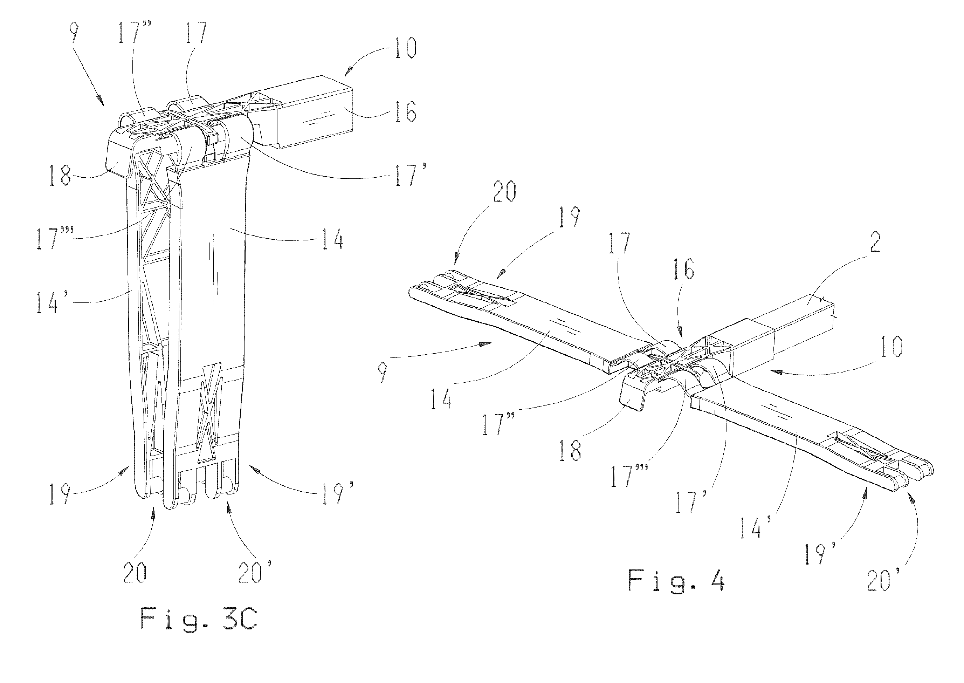

Figuren 3A, 3B, 3C zeigen jeweilige Ansichten einer aus Kunststoff hergestellten Faltplatte 9 für eine Schiebeverdeckstruktur eines Lastwagens gemäß einer Ausführungsform, wobei Figur 3A die Faltplatte 9 in isometrischer Ansicht von oben, Figur 3B die Faltplatte 9 in isometrischer Ansicht von unten und Figur 3C die Faltplatte 9 in aufgefaltetem Zustand zeigt. Wie in den Figuren erkennbar ist, weist die Faltplatte 9 ein erstes Faltplattenelement 14 und ein zweites Faltplattenelement 14' auf, welche im Wesentlichen gleich ausgebildet sind und spiegelsymmetrisch zu einem Gelenkachsenelement 16, an welchem das erste Faltplattenelement 14 und das zweiten Faltplattenelement 14' jeweils angelenkt sind, angeordnet sind. Die gelenkige Verbindung des ersten Faltplattenelements 14 und des zweiten Faltplattenelements 14' erfolgt über die Anlenkung der Faltplattenelemente 14,14' mittels erster und zweiter Filmscharniere 17, 17', 17", 17"' an das mittig zwischen dem ersten und zweiten Faltplattenelement 14, 14' angeordnete Gelenkachsenelement 16, welches eine Spriegelanbindungseinrichtung 10 aufweist. In der hier dargestellten Ausführungsform ist das erste Faltplattenelement 14 über die Filmscharniere 17 und 17" mit dem Gelenkachsenelement 16 bzw. der Spriegelanbindungseinrichtung 10 verbunden und das zweite Faltplattenelement 14' ist mit dem Gelenkachsenelement 16 bzw. der Spriegelanbindungseinrichtung 10 über die beiden Filmscharniere 17' und 17"' verbunden. Zum Auffalten der Schiebeverdeckstruktur, wie es in Figur 3C dargestellt ist, sind das erste Faltplattenelement 14 und das zweite Faltplattenelement 14' jeweilig um das Gelenkachsenelement 16 herum schwenkbar, bis sich die beiden Faltplattenelemente 14, 14' im Wesentlichen parallel gegenüberliegen und senkrecht zu der Spriegelanbindungseinrichtung 10 ausgerichtet sind. Weiterhin ist an dem Gelenkachsenelement 16 an dem gegenüberliegenden Ende, welches mit einem Spriegel verbindbar ist, eine Befestigungseinrichtung 18 für eine Plane (hier nicht dargestellt) vorgesehen. An den jeweiligen Enden 19, 19' des ersten bzw. zweiten Faltplattenelements 14, 14' ist jeweils an dem Ende, welches nicht mit dem Gelenkachsenelement 16 verbunden ist, eine Lagerstelle 20, 20' zum Anbinden der Faltplatte 9 an hier nicht dargestellte Rollenwagen vorgesehen.

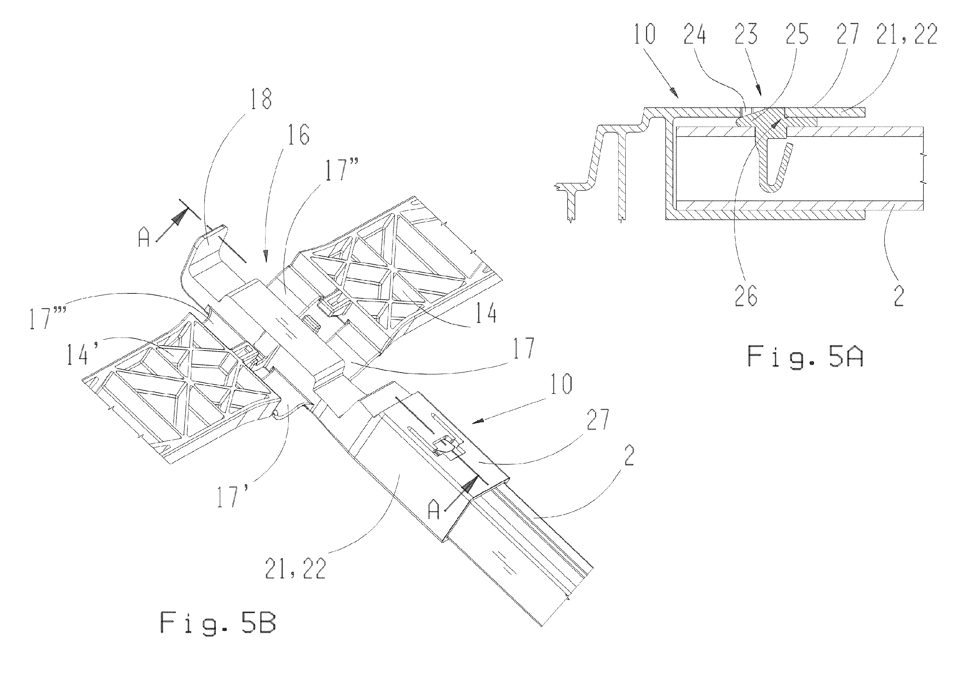

Figur 4 zeigt eine isometrische Ansicht von der in den Figuren 3A bis 3C dargestellten Faltplatte 9, wobei in der Spriegelanbindungseinrichtung 10 ein Spriegel 2 aufgenommen ist, wie näher in Zusammenhang mit Figuren 5A und 5B beschrieben werden wird.

Figuren 5A und 5B sind Ansichten eines Details im Spriegelanbindungsbereich bzw. von der Spriegelanbindungseinrichtung 10 der in Figuren 3A bis 3C dargestellten Faltplatte 9, wobei Figur 5A eine isometrische Ansicht der Spriegelanbindungseinrichtung 10 von unten ist und Figur 5B eine Schnittansicht entlang der Linie A-A von Figur 5A. Wie in den Figuren gut erkennbar ist, ist die Spriegelanbindungseinrichtung 10 mit einer Aufnahme 21 ausgestattet, welche mit einem Element 22 versehen ist, in welches der Spriegel 2 einführbar ist. Alternativ kann die Aufnahme 21 auch ausgebildet sein, um in eine entsprechende Ausnehmung in dem Spriegel 2 einführbar bzw. aufnehmbar zu sein. Um sicherzustellen, dass der Spriegel 2 nicht aus der Aufnahme 21 herausrutscht, ist die Aufnahme 21 mit einer Rasteinrichtung 23 versehen (siehe Figur 5B). Die Rasteinrichtung 23 ist hier als Ausnehmung 24 ausgebildet, in welche eine an dem Spriegel 2 ausgebildete Rastnase 25 einrastet. Die Rastnase 25 ist keilförmig ausgebildet und verhindert ein Herausrutschen des Spriegels 2 durch Anschlag an der durch das Bezugszeichen 26 gekennzeichneten Position. Ebenso ist es auf einfache Weise aufgrund der Einlaufschräge der Rastnase 25 möglich, den Spriegel 2 mit der daran vorhandenen Rastnase 25 in die Aufnahme 21 zu schieben. Hierbei verformt sich die Aufnahme 21 kurzzeitig, indem sich die obere Decke 27 nach oben verschiebt, bis die Rastnase 25 einrastet. Ein Lösen ist umgekehrt möglich. Hierzu kann durch Einführen beispielsweise eines Schraubenziehers die Aufnahme 21 verformt werden, so dass sie nicht mehr in Eingriff mit der Rastnase 25 steht und diese freigegeben wird, so dass der Spriegel 2 einfach herausziehbar ist.

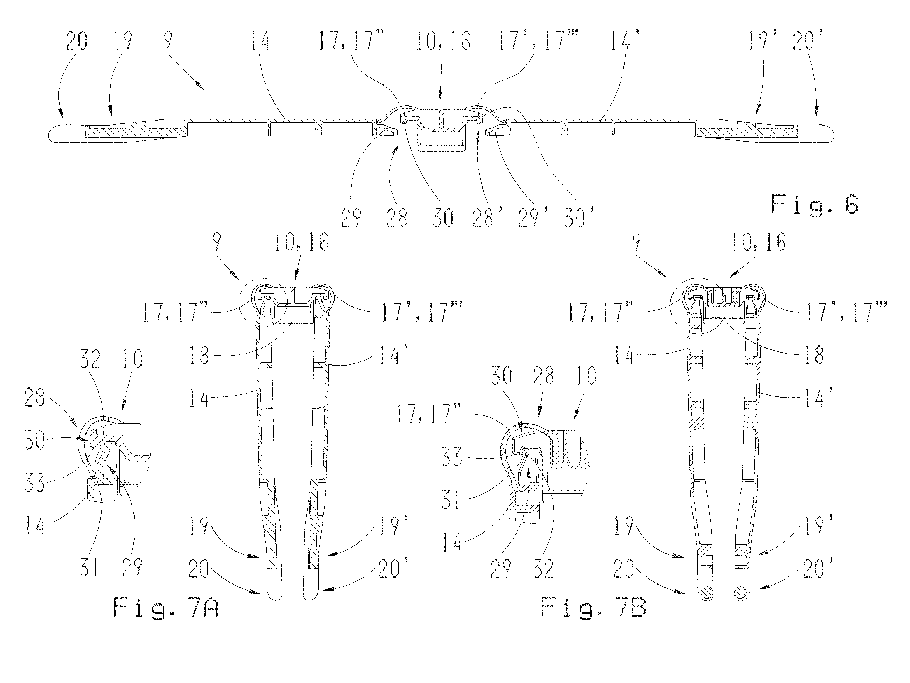

Figur 6 ist eine Schnittansicht durch die in den Figuren 3A bis 3C dargestellte Faltplatte 9. Die Filmscharniere 17, 17', 17", 17"' sind jeweils mit einer Wölbung versehen, welche zum Längenausgleich, wie oben bereits erläutert, dient. Wie hier gut erkennbar ist, ist zwischen der ersten Faltplatte 14 und dem die Spriegelanbindungseinrichtung 10 aufweisenden Gelenkachsenelement 16 und zwischen der zweiten Faltplatte 14' und dem die Spriegelanbindungseinrichtung 10 aufweisenden Gelenkachsenelement 10 jeweils im Bereich der Filmscharniere 17, 17"' und 17', 17"eine Abstützeinrichtung 28, 28' vorgesehen. Die Abstützeinrichtung 28, 28' weist jeweils ein erstes Abstützelement 29, 29' auf, welches an dem ersten Faltplattenelement 14 bzw. an dem zweiten Faltplattenelement 14' vorgesehen ist. Weiterhin weist die Abstützeinrichtung 28, 28' jeweils ein zweites Abstützelement 30, 30' auf, welches an dem die Spriegelanbindungseinrichtung 10 aufweisenden Gelenkachsenelement 16 jeweils gegenüberliegend dem ersten Abstützelement 29, 29' an dem ersten Faltplattenelement 14 bzw. an dem zweiten Faltplattenelement 14' angeordnet ist.

Figuren 7A und 7B sind Details des Gelenkbereichs der in den Figuren 3A bis 3C dargestellten Faltplatte 9. Wie besonders gut in Figur 7A erkennbar ist, ist das erste Abstützelement 29 bzw. 29' der Abstützeinrichtung 28 bzw. 28' als Vorsprung 31 ausgebildet, wohingegen das zweite Abstützelement 30 bzw. 30' mit einer Ausnehmung 32 zum in Eingriff nehmen des Vorsprungs 31 ausgebildet ist. Weiterhin weist das zweite Abstützelement 30 bzw. 30' gegenüber dem ersten Abstützelement 29 bzw. 29' einen Überstand 33 auf, um einen sicheren Eingriff des ersten Abstützelements 29 bzw. 29' mit dem zweiten Abstützelement 30 bzw. 30' zu gewährleisten.

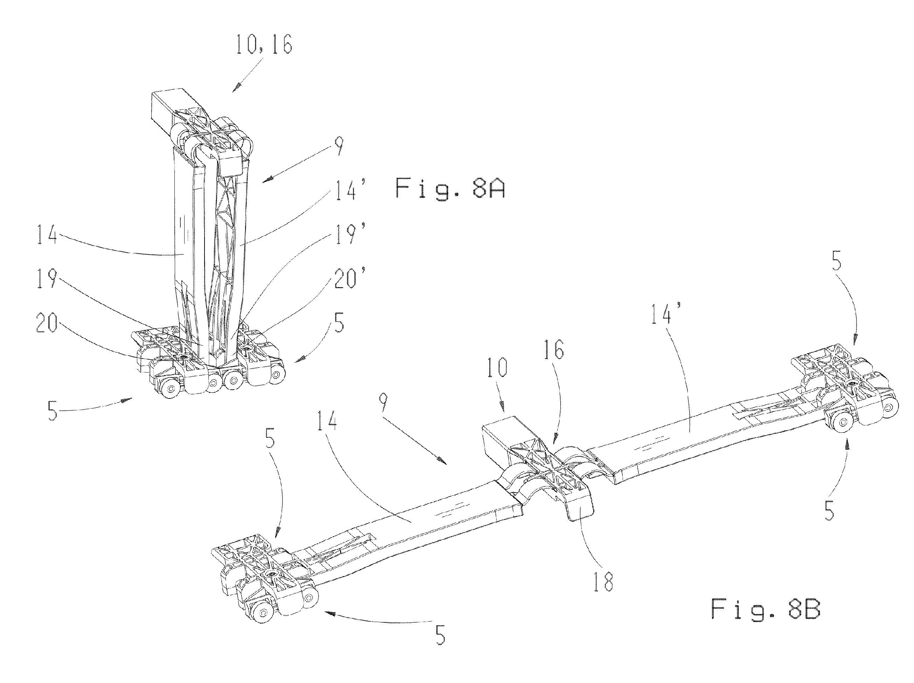

Figuren 8A und 8B sind Ansichten der in den Figuren 3A bis 3C dargestellten Faltplatte 9, welche auf den Rollenwagen 5 montiert ist, wobei Figur 8A die Faltplatte 9 in aufgefaltetem Zustand zeigt und Figur 8B die Faltplatte 9 in ausgefahrenem bzw. ungefalteten Zustand zeigt. Die Anbindung der Faltplatte 9 mit ihren jeweiligen Enden 19 und 19' an jeweilige Rollenwagen 5 erfolgt über die bereits in Zusammenhang mit den Figuren 3A bis 3C erwähnten Lagerstellen 20, 20'.

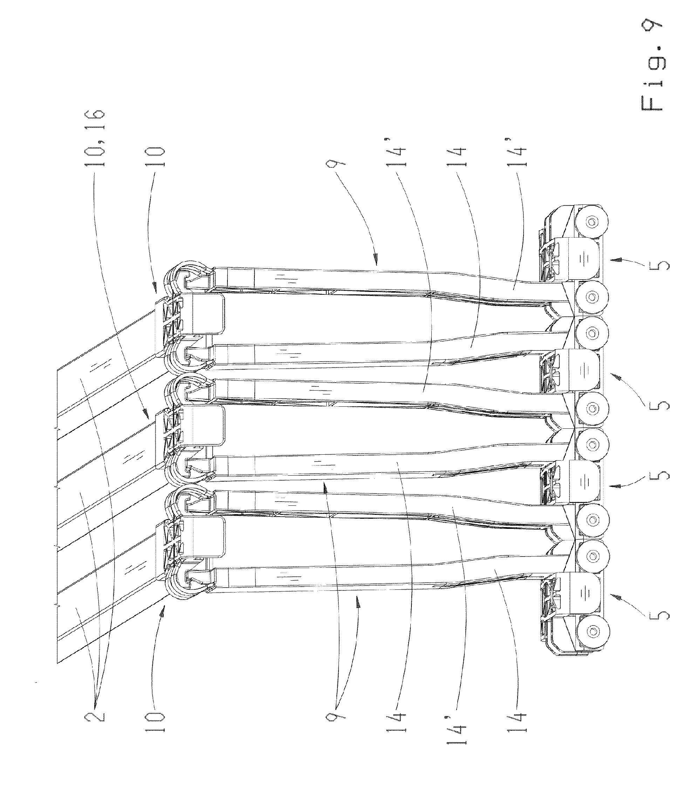

Figur 9 zeigt eine Vielzahl von Faltplatten 9 mit darin aufgenommenen Spriegeln 2, wobei die Faltplatten 9 jeweils, wie oben beschrieben, auf den Rollenwagen 5 montiert sind.

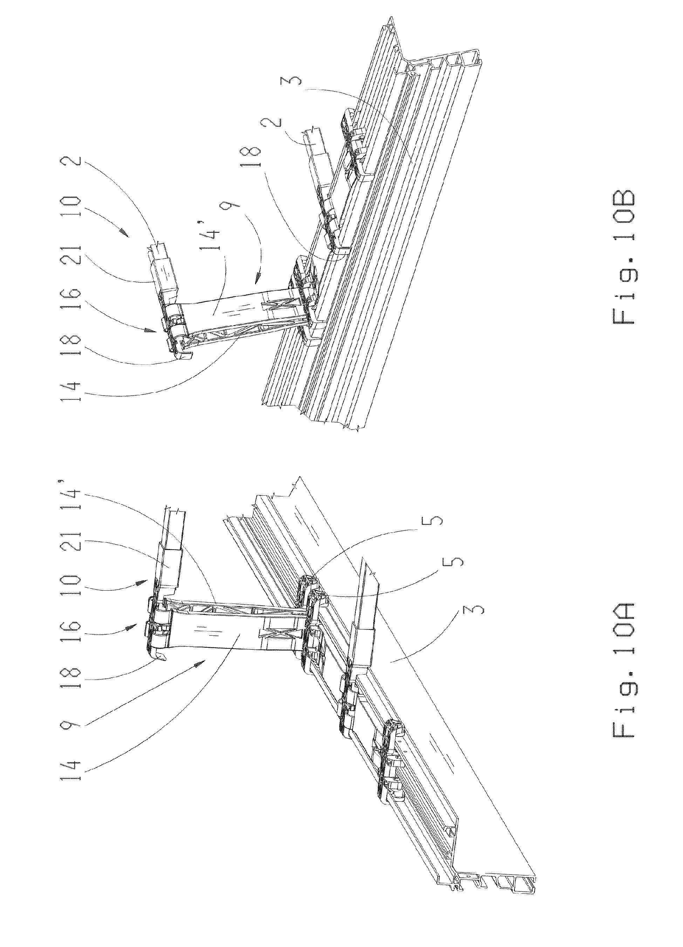

Figuren 10A und 10B sind jeweilige Ansichten der in den Figuren 3A bis 3C dargestellten Faltplatte 9, welche über die Rollenwagen 5 verschiebbar auf einem Längsgurt 3 einer Schiebeverdeckstruktur 1, wie sie in Figur 1 dargestellt ist, angeordnet ist. Sowohl in Figur 10A als auch in Figur 10B ist die Faltplatte 9 in einem aufgefalteten Zustand gezeigt.

### Bezugszeichen

- 1: Schiebeverdeckstruktur
- 2: Spriegel
- 3, 3': Längsgurte
- 4: Rollenwagen mit Seilanbindung
- 5: Standard-Rollenwagen
- 6: Endrollenwagen
- 7: erstes Ende
- 8: Portalbalken
- 9: Faltplatten
- 10: Spriegelanbindungseinrichtung
- 11: Rollen
- 12: zweites Ende
- 13, 13': Verriegelungsmechanismus
- 14, 14': erstes und zweites Faltplattenelement
- 15: Schlaufe
- 16: Gelenkachsenelement
- 17, 17', 17'', 17''': Filmscharniere
- 18: Befestigungseinrichtung
- 19, 19': Enden des ersten bzw. zweiten Faltplattenelements
- 20, 20': Lagerstellen
- 21: Aufnahme
- 22: Element
- 23: Rasteinrichtung
- 24: Ausnehmung
- 25: Rastnase
- 26: Anschlagsposition der Rastnase
- 27: obere Decke der Aufnahme
- 28, 28': Abstützeinrichtung
- 29, 29': erstes Abstützelement
- 30, 30': zweites Abstützelement
- 31: Vorsprung
- 32: Ausnehmung
- 33: Überstand
- 34: Verbindungsstruktur

## Patentansprüche

1. Faltplatte (9) für eine Schiebeverdeckstruktur (1) eines Lastwagens, welche ein erstes Faltplattenelement (14) und ein zweites Faltplattenelement (14') aufweist, welche jeweilig mit einem mittig zwischen dem ersten Faltplattenelement (14) und dem zweiten Faltplattenelement (14') angeordneten Gelenkachsenelement (16) verbunden sind, **dadurch gekennzeichnet, dass** das Gelenkachsenelement (16) eine Spriegelanbindungseinrichtung (10) aufweist.

2. Faltplatte (9) gemäß Anspruch 1, **dadurch gekennzeichnet, dass** an dem Gelenkachsenelement (16) Filmscharniere (17, 17', 17", 17"') vorgesehen sind, insbesondere zumindest ein erstes Filmscharnier (17, 17"), welches das erste Faltplattenelement (14) gelenkig mit dem Gelenkachsenelement (16) verbindet, und zumindest ein zweites Filmscharnier (17', 17"), welches das zweite Faltplattenelement (14') gelenkig mit dem Gelenkachsenelement (16) verbindet.

3. Faltplatte (9) gemäß Anspruch 1 oder 2, **dadurch gekennzeichnet, dass** an dem ersten Faltplattenelement (14) und an dem zweiten Faltplattenelement (14') jeweils ein erstes Abstützelement (29, 29') angeordnet ist, welches ausgebildet ist, um sich in aufgeklapptem Zustand der Faltplatte (9) an einem jeweils gegenüberliegend dem ersten Abstützelement (29, 29') an dem Gelenkachsenelement (16) angeordneten zweiten Abstützelement (30, 30') abzustützen.

4. Faltplatte (9) gemäß Anspruch 3, **dadurch gekennzeichnet, dass** das erste Abstützelement (29, 29') als Vorsprung (31) ausgebildet ist und das zweite Abstützelement (30, 30') als Ausnehmung (32) zum in Eingriff nehmen des Vorsprungs (31) ausgebildet ist.

5. Faltplatte (9) gemäß Anspruch 2 oder 3, **dadurch gekennzeichnet, dass** das zweite Abstützelement (30, 30') gegenüber dem ersten Abstützelement (29, 29') in aufgefaltetem Zustand einen Überstand (32) aufweist.

6. Faltplatte (9) gemäß einem der Ansprüche 1 bis 5, **dadurch gekennzeichnet, dass** die Faltplatte (9) aus Kunststoff, insbesondere einstückig, hergestellt ist.

7. Faltplatte (9) gemäß einem der Ansprüche 2 bis 6, **dadurch gekennzeichnet, dass** das zumindest eine erste Filmscharnier (17, 17"') und das zumindest eine zweite Filmscharnier (17', 17") jeweils eine Wölbung aufweisen.

8. Faltplatte (9) gemäß einem der Ansprüche 1 bis 7, **dadurch gekennzeichnet, dass** die Spriegelanbindungseinrichtung (10) eine Aufnahme (21) für einen Spriegel (2) aufweist, welche mit einem Element (22) ausgebildet ist, in welches der Spriegel (2) einführbar ist.

9. Faltplatte (9) gemäß einem der Ansprüche 1 bis 7, **dadurch gekennzeichnet, dass** die Aufnahme (21) mit einem Element ausgebildet ist, welches in den Spriegel (2) einführbar ist.

10. Faltplatte (9) gemäß Anspruch 8 oder 9, **dadurch gekennzeichnet, dass** die Aufnahme (21) mit einer Rasteinrichtung (23) zum Verrasten mit dem Spriegel (2) ausgebildet ist.

11. Faltplatte (9) gemäß Anspruch 10, **dadurch gekennzeichnet, dass** die Rasteinrichtung (23) als Ausnehmung (24) in der Aufnahme (22) zum Einrasten einer an dem Spriegel (2) ausgebildeten Rastnase (25) ausgebildet ist.

12. Spriegel (2) für eine Schiebeverdeckstruktur (1) eines Lastwagens, **dadurch gekennzeichnet, dass** der Spriegel (2) aus Kunststoff hergestellt ist.

13. Spriegel (2) gemäß Anspruch 12, **dadurch gekennzeichnet, dass** der Kunststoff ein Duroplast ist.

14. Spriegel (2) gemäß Anspruch 12 oder 13, **dadurch gekennzeichnet, dass** der Spriegel (2) beidseitig Endabschnitte aufweist, welche jeweils mit einer Rasteinrichtung, insbesondere mit einer keilförmig ausgebildeten Rastnase (25) zum Einrasten in eine an einer Spriegelanbindung (10) vorgesehenen Ausnehmung (24) versehen ist.
